# EUROPEAN PATENT SPECIFICATION

(11) **EP 3 317 167 B1**
(45) Date of publication and mention of the grant of the patent: **15.04.2020**
(21) Application number: 16821728.9
(22) Date of filing: 13.06.2016
(51) Int. Cl.: B62D 61/12, B62D 59/04, B62D 21/18, B62D 55/02, B60P 3/41

(54) **ARRANGEMENT AND VEHICLE**
BAUGRUPPE UND FAHRZEUG
AGENCEMENT ET VÉHICULE

(30) Priority: 03.07.2015 SE 1550969
(43) Date of publication of application: 09.05.2018
(73) Proprietor: Komatsu Forest AB, 907 04 Umeå (SE)
(72) Inventor: NILSSON, Erik, 913 42 Obbola (SE); BOSTRÖM, Ola, 907 88 Täfteå (SE)
(74) Representative: Zacco Sweden AB
(86) International application number: PCT/SE2016/050568
(87) International publication number: WO 2017/007394

(56) References cited:
- EP-A1- 2 730 444
- WO-A1-2013/178882
- US-A- 2 974 976
- US-A- 4 079 798
- US-A- 4 350 358
- US-A- 4 657 099

## Description

### TECHNICAL AREA

This invention concerns an arrangement intended to be mounted at a vehicle that comprises a load-bearing part and driving wheels. The invention concerns also a vehicle comprising such an arrangement.

### BACKGROUND

Vehicles, machines, agricultural machines and forestry machines have long been used within forestry in order to automate many of the operations that are to be carried out on location in a forest. The vehicles have a weight that is not insignificant, independently of whether they are driven with the aid of wheels or tracks, which means that the forest, the support of the vehicle in the forest, the ground, over which the vehicle is driven and on which it stands, is affected. The ground is compressed by the weight of the vehicle and the damage to the ground may be permanent in the form of damage that does not recover without intervention. This damage to the ground may result in erosion, leakage of humus and nutrients, the unplanned formation of ditches, and compression of the pore system of the ground, all of which may have consequences. All such consequences affect the remaining forest, through, for example, lower resistance to storms due to roots that are torn off and/or thick roots that are shallow, to increased root rot as a consequence of root damage, and to loss of growth. Once the damage has taken place, all attempts to restore the ground are expensive, or totally impossible.

Repair of damage caused by driving is most often of a cosmetic nature. Up to half of the support capacity of the ground arises from the roots. The support capacity is, therefore, difficult to restore when the vegetation and root systems have been broken. Furthermore, repair by, for example, the use of an excavator means that the ground is excavated one more time. This increases further the risk for the undesired transport of slurry, humus, nutrients and heavy metals into lakes and watercourses. For these reasons, the damage caused by driving should be attempted to be prevented as far as possible.

In order to avoid damage to the ground and damage caused by driving, a great deal of time has been invested in planning appropriate routes, passages and collection points well in advance of a felling operation. This is not only time-consuming but also expensive.

The compression of the ground by the weight of the vehicle can lead also to the driving of the vehicle becoming more difficult.

Patent application EP 2730444A1 disclose a known solutions to reduce the pressure exerted against the ground, by using extra wheels. For example could an extra pair of wheels that could be lifted and lowered in a vertical direction, and thereby distribute the payload on the vehicle axles. EP 2730444A1 also discloses that said extra wheels can be subject to a driving force.

Another solution representing the prior art is Patent application D1 US4079798 which discloses an extra pair of wheels placed in each side of the vehicle, which distributes the weight of the load, and allow each pair of extra wheels to follow any irregular contours of the terrain and sustain a normal force of engagement with the ground.

Patent publication WO2013/17882 A1, relates to an arrangement in a forestry machine, comprising at least one auxiliary wheel, in order to increase the load-bearing capacity of the rear part, said extra wheel(s) can be individually controlled in the vertical direction and are mounted at the vehicle in order to distribute the weight of the vehicle

### SUMMARY OF THE INVENTION

One purpose of the present arrangement is to reduce the influence on the forest from a vehicle, on the support of a vehicle in the forest, on the ground, where the vehicle is driven or allowed to stand. This purpose is achieved with an arrangement comprising the technical features that are made clear by claim 1. This purpose is achieved also with a vehicle comprising such an arrangement according to claim 15.

### DESCRIPTION OF DRAWINGS

Figure 1 shows a vehicle and an arrangement according to the invention.
Figure 2 shows the arrangement and the vehicle in Figure 1 seen from above.
Figure 3 shows the arrangement and the vehicle in Figure 1 seen from above.
Figure 4 shows two extra wheels comprised in an arrangement according to the invention on various supports.
Figure 5 shows a second embodiment of an arrangement and a vehicle according to the invention.
Figure 6 shows the arrangement and the vehicle in Figure 5 seen from above.
Figure 7 shows the arrangement and the vehicle in Figure 5 seen from above.
Figure 8 shows a further embodiment of the invention.
Figure 9 shows an auxiliary motor comprised in an arrangement according to the invention.
Figure 10 shows a damping arrangement comprised in an arrangement according to the invention.

### DESCRIPTION OF EMBODIMENTS

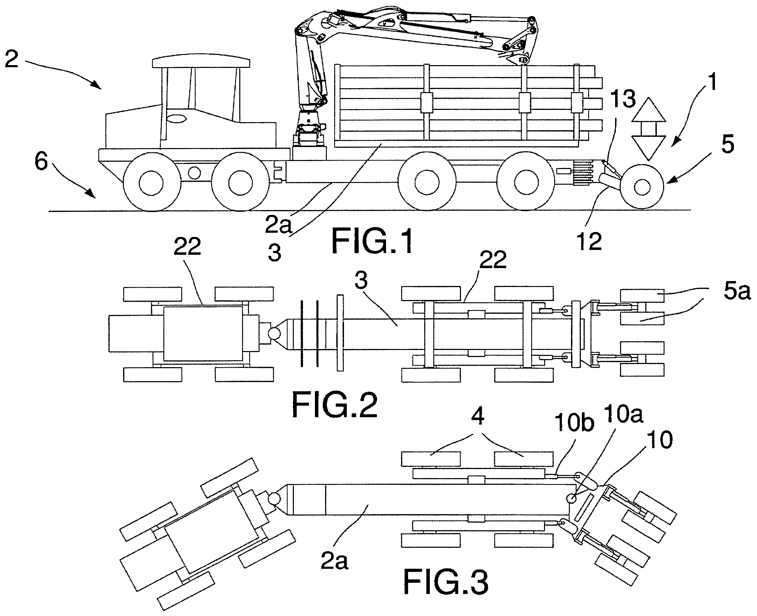

This invention concerns an arrangement 1 intended to be mounted at a vehicle 2 that comprises a load-bearing part 3 and driving wheels 4. See Figure 1-Figure 8.

The arrangement 1 comprises at least two individually controlled extra wheels 5 mounted at the vehicle 2, where it is appropriate that one wheel is located on each side of the vehicle 2, such that two extra wheels 5 are located in a pair, in order to distribute the weight of the machine, the gross weight of the machine including the weight of its payload, over more areas of the support 6, the ground. This improves the distribution of weight and reduces the pressure on the support, the ground, exerted by the vehicle 2. The extra wheels 5 give a direct support and a supplementary ability to distribute the weight, in addition to the normal vehicle wheels 4.

The term "individually controlled extra wheels 5" is here used to denote that each extra wheel, independently of its location on the vehicle 2, can be controlled and adjusted and can follow the support 6, without being influenced by, and without influencing, other extra wheels and their locations. It is possible also that two extra wheels 5 be located on the same side of the vehicle 2, if this is required in special terrain. It is possible also that more than two extra wheels 5 be mounted at a vehicle.

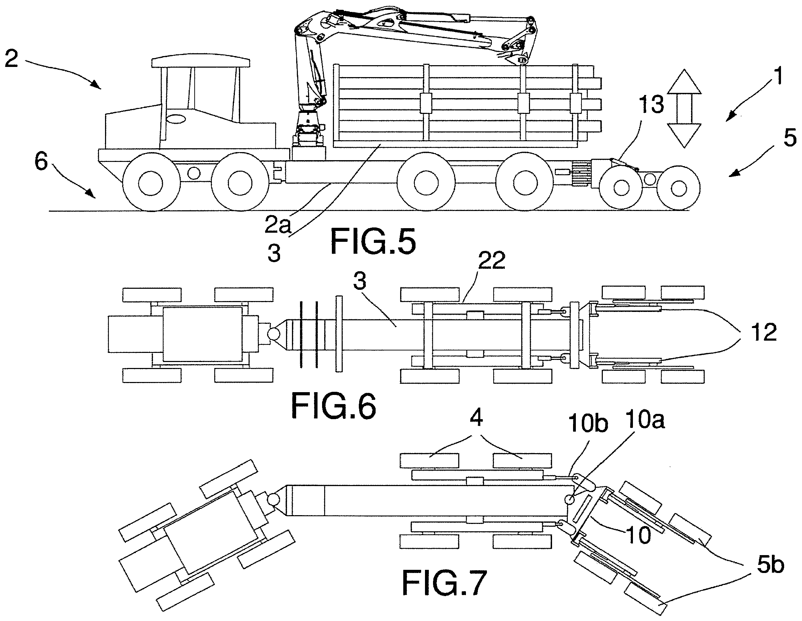

The individually controlled extra wheels 5 may have different designs. It is appropriate that each extra wheel 5 comprises a pair of wheels 5a. Each extra wheel may also comprise also a wheel bogie pair 5b. See Figure 1 and Figure 5.

The individually controlled extra wheels 5 are subject to a driving force. The driving force on the wheels further facilitates the driving of the vehicle 2 on the support, and since the extra wheels 5 are driven and move relative to the support, the extra wheels 5 will be in motion and will not become as easily stuck in such material as is located on the support 6, such as, for example, vegetation.

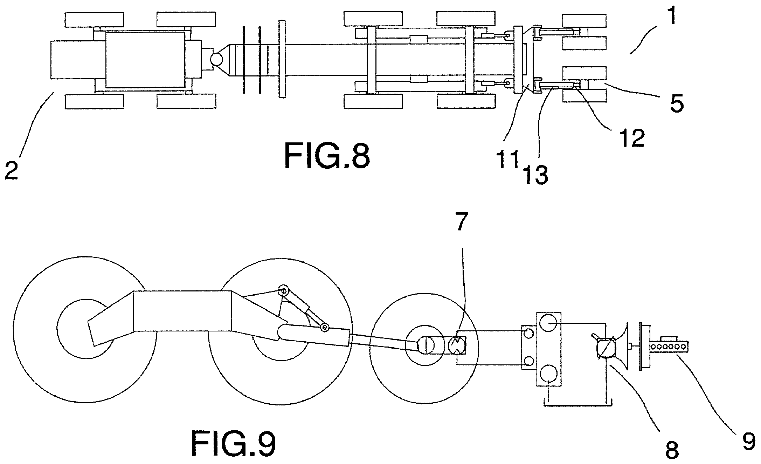

The individually controlled extra wheels 5 may be hydraulically driven or electrically driven. It is appropriate that the arrangement comprise an auxiliary motor 7 that drives the extra wheels 5. The motor is driven by a hydraulic system comprising a pump 8. The pump 8 is driven by an additional source of energy 9, such as, for example, a diesel engine. See Figure 9.

In order that the extra wheels 5 are to offer support where it is most needed, for the balance of the vehicle 2 on the support 6 and possibly also for improved driving of the vehicle 2 over the support 6, the individually controlled extra wheels 5 are mounted at the vehicle 2 at appropriate locations on the vehicle 2. The individually controlled extra wheels 5 may be mounted at the vehicle 2 on a part 10 of the vehicle 2 that can be controlled or on a fixed part 11 of the chassis system 2a of the vehicle that cannot be controlled. In the case in which the extra wheels 5 are mounted at the vehicle 2 through a part 10 of the vehicle 2 that can be controlled, this part 10 is jointed at at least one vertical bearing 10a and is controlled with the aid of at least two control cylinders 10b. See Figure 1, Figure 5 and Figure 8.

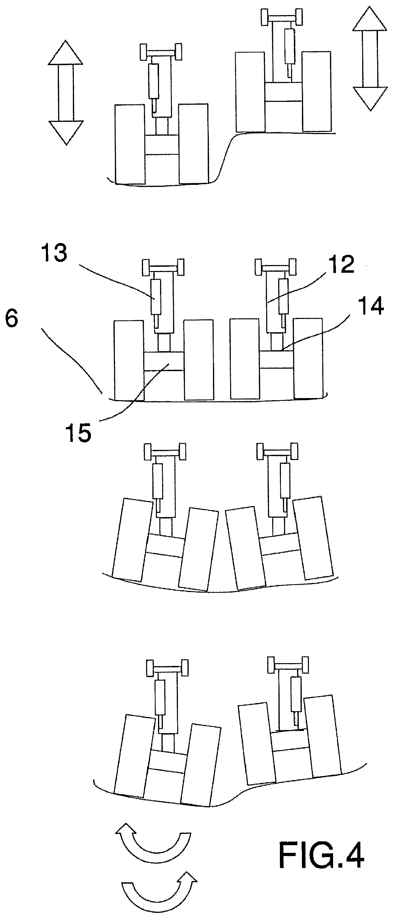

The arrangement 1 comprises at least two damped, jointed, spring-mounted arms 12 on which the extra wheels 5 are mounted. One arm 12 is arranged on each side of the vehicle. Each arm 12 is individually controlled and mounted in bearings, and can move independently of the motion of the other arm. See Figure 4.

Each arm 12 comprises a damping arrangement 13 that damps the motion of the arm, and a rotatable shaft 14 that is mounted in bearings and supports the extra wheel 5. The rotatable shaft 14 that is mounted in bearings supports the wheel axle 15 of a pair of wheels. See Figure 4.

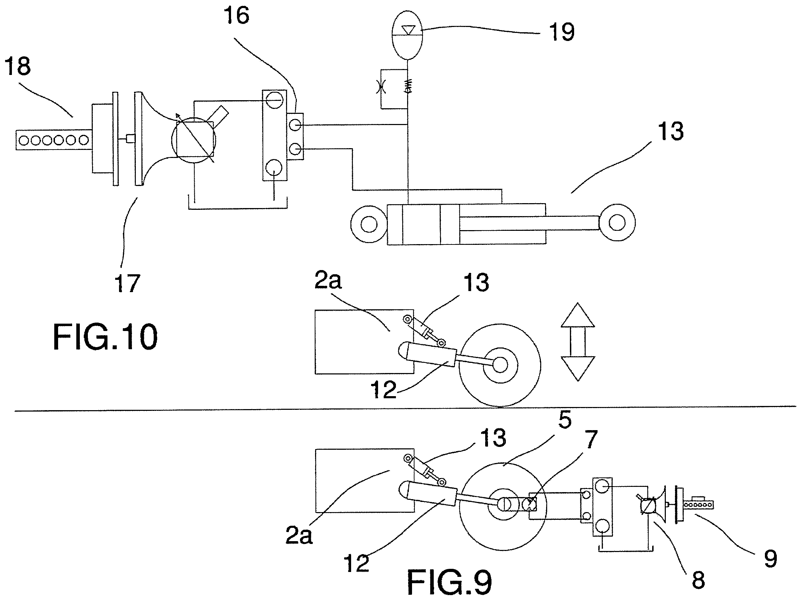

It is appropriate that the damping arrangement 13 of the arm comprise a damped cylinder that retains, presses, the extra wheel 5 against the support 6 in order to ensure that the extra wheel 5 is in contact with the support 6 and in this way improve the distribution of weight and reduce the pressure exerted by the vehicle 2 onto the support 6, the ground. The damping arrangement, the damped cylinder 13, is controlled by a hydraulic unit 16 that is fed by a hydraulic pump 17 that obtains its energy from a selected source of energy 18, such as, for example, an electric motor, a diesel engine or other source of energy or source of power. See Figure 10.

The damping arrangement, the damping cylinder 13, comprises an accumulator 19 that offers a spring facility and that can store energy for a short period. See Figure 10.

The invention concerns also a vehicle 2 comprising an arrangement 1 of the type that has been described above. The load-bearing part 3 of the vehicle comprises a conventional load-bearing frame. The load-bearing part 3 may comprise also a separate displaceable load carrier. The driving wheels 4 of the vehicle comprise a mechanically driven, a hydraulically driven, or an electrically driven bogie 22.

The vehicle 2 is intended to be used within forestry or agriculture since it is within these fields of use that it is economically and biotopically interesting that damage to the ground is avoided or at least minimised. Other fields of use in which damage to the ground should be avoided or at least minimised may, of course, become relevant.

## Claims

1. An arrangement (1) intended to be mounted at a vehicle (2) intended for forestry, comprising a load-bearing part (3) and driving wheels (4), where the arrangement (1) comprises at least two extra wheels (5) that can be individually controlled in the vertical direction and that are mounted at the vehicle (2) in order to distribute the weight of the vehicle, the gross weight of the vehicle including its payload weight, over more areas of the support (6), the ground, and in this way improve the distribution of weight and reduce the pressure exerted against the support, the ground, **characterised in that** each of the individually controlled extra wheels comprises a pair of wheels and is subject to a driving force.

2. The arrangement (1) according to claim 1, where each of the individually controlled extra wheels (5) comprises a wheel bogie (5b).

3. The arrangement according to claim 1, comprising an auxiliary motor (7) that drives the extra wheel (5).

4. The arrangement (1) according to claim 3, where the motor (7) is driven by a hydraulic system comprising a pump (8).

5. The arrangement according to claim 4, comprising a source of energy (9) that drives the pump (8).

6. The arrangement (1) according to any one of claims 1-5, where the individually controlled extra wheels (5) are mounted at the vehicle (2) on part (10) of the vehicle (2) that can be controlled.

7. The arrangement (1) according to claim 6, where the part (10) of the vehicle that can be controlled is jointed at at least one set of vertical bearings (10a) and is controlled with the aid of at least two control cylinders (10b).

8. The arrangement (1) according to any one of claims 1-5, where the individually controlled extra wheels (5) are mounted at the vehicle (2) on a part (11) of the chassis system of the vehicle (2) that cannot be controlled.

9. The arrangement (1) according to any one of claims 1-8, comprising at least two arms (12) on which the extra wheels (5) are mounted.

10. The arrangement (1) according to claim 9, where each arm (12) is individually controlled and mounted in bearings, and can move independently of the motion of the other arm.

11. The arrangement (1) according to claim 9 or 10, where each arm (12) comprises a damping arrangement (13) that damps the motion of the arm, and a rotatable shaft (14) that is mounted in bearings and supports the extra wheel (5).

12. The arrangement (1) according to claim 11, where the rotatable shaft (14) that is mounted in bearings supports a wheel axle (15) of a pair of wheels.

13. The arrangement (1) according to claim 11 or 12, where the damping arrangement (13) comprises a damping cylinder that is controlled by a hydraulic unit (16) that is fed by a hydraulic pump (17) that obtains its energy from a selected source of energy (19).

14. The arrangement (1) according to any one of claims 11-13, comprising an accumulator (19) that offers a spring facility and that can store energy for a short period.

15. A vehicle (2) comprising a load-bearing part (3), driving wheels (4) and an arrangement (1) according to any one of claims 1-14.

16. The vehicle (2) according to claim 15, where the load-bearing part (3) comprises a conventional load-bearing frame.

17. The vehicle (2) according to claim 15 or 16, where the load-bearing part (3) comprises a separate displaceable load carrier.

18. The vehicle (2) according to any one of claims 15-17, where the driving wheels (4) comprise a mechanically driven bogie.

19. The vehicle (2) according to any one of claims 15-17, where the driving wheels (4) comprise a hydraulically driven bogie.

20. The vehicle (2) according to any one of claims 15-17, where the driving wheels (4) comprise an electrically driven bogie.

## Patentansprüche

1. Anordnung (1), die dazu bestimmt ist, an einem für die Forstwirtschaft vorgesehenen Fahrzeug (2) montiert zu werden, umfassend einen lasttragenden Teil (3) und Antriebsräder (4), wobei die Anordnung (1) mindestens zwei Zusatzräder (5) umfasst, die individuell in der Vertikalrichtung steuerbar sind und die am Fahrzeug (2) montiert sind, um das Gewicht des Fahrzeugs, das Bruttogewicht des Fahrzeugs einschließlich seines Nutzlastgewichts, über mehrere Bereiche der Stütze (6), den Boden, zu verteilen, und auf diese Weise die Verteilung des Gewichts zu verbessern, und den auf die Stütze, den Boden, ausgeübten Druck zu verringern, **dadurch gekennzeichnet, dass** jedes der individuell gesteuerten Zusatzräder ein Paar von Rädern umfasst und einer treibenden Kraft ausgesetzt ist.

2. Anordnung (1) nach Anspruch 1, wobei jedes der individuell gesteuerten Zusatzräder (5) ein Raddrehgestell (5b) umfasst.

3. Anordnung nach Anspruch 1, umfassend einen das Zusatzrad (5) antreibenden Hilfsmotor (7).

4. Anordnung (1) nach Anspruch 3, wobei der Motor (7) von einem eine Pumpe (8) umfassenden Hydrauliksystem angetrieben wird.

5. Anordnung nach Anspruch 4, umfassend eine die Pumpe (8) antreibende Energiequelle (9).

6. Anordnung (1) nach einem der Ansprüche 1 bis 5, wobei die individuell gesteuerten Zusatzräder (5) auf dem Fahrzeug (2) an einem steuerbaren Teil (10) des Fahrzeugs (2) montiert sind.

7. Anordnung (1) nach Anspruch 6, wobei der steuerbare Teil (10) des Fahrzeugs mit mindestens einem Satz von vertikalen Lagern (10a) verbunden ist und mittels mindestens zweier Steuerzylinder (10b) gesteuert wird.

8. Anordnung (1) nach einem der Ansprüche 1 bis 5, wobei die individuell gesteuerten Zusatzräder (5) auf dem Fahrzeug (2) an einem nicht steuerbaren Teil (11) des Fahrwerkssystems des Fahrzeugs (2) montiert sind.

9. Anordnung (1) nach einem der Ansprüche 1 bis 8, umfassend mindestens zwei Arme (12), an welchen die Zusatzräder (5) montiert sind.

10. Anordnung (1) nach Anspruch 9, wobei jeder Arm (12) individuell gesteuert und in Lagern montiert ist und sich unabhängig der Bewegung des anderen Arms bewegen kann.

11. Anordnung (1) nach Anspruch 9 oder 10, wobei jeder Arm (12) eine die Bewegung des Arms dämpfende Dämpfungsanordnung (13) und eine in Lagern montierte und das Zusatzrad (5) unterstützende drehbare Welle (14) umfasst.

12. Anordnung (1) nach Anspruch 11, wobei die in Lagern montierte drehbare Welle (14) eine Radachse (15) eines Paares von Rädern unterstützt.

13. Anordnung (1) nach Anspruch 11 oder 12, wobei die Dämpfungsanordnung (13) einen Dämpfungszylinder umfasst, der von einer Hydraulikeinheit (16) gesteuert wird, die von einer Hydraulikpumpe (17) gespeist wird, die ihre Energie aus einer ausgewählten Energiequelle (19) bezieht.

14. Anordnung (1) nach einem der Ansprüche 11 bis 13, umfassend einen Akkumulator (19), der eine Federeinrichtung bietet und der in der Lage ist, für einen kurzen Zeitraum Energie zu speichern.

15. Fahrzeug (2) umfassend einen lasttragenden Teil (3), Antriebsräder (4) und eine Anordnung (1) nach einem der Ansprüche 1 bis 14.

16. Fahrzeug (2) nach Anspruch 15, wobei der lasttragende Teil (3) einen herkömmlichen lasttragenden Rahmen umfasst.

17. Fahrzeug (2) nach Anspruch 15 oder 16, wobei der lasttragende Teil (3) einen separaten versetzbaren Lastträger umfasst.

18. Fahrzeug (2) nach einem der Ansprüche 15 bis 17, wobei die Antriebsräder (4) ein mechanisch angetriebenes Drehgestell umfassen.

19. Fahrzeug (2) nach einem der Ansprüche 15 bis 17, wobei die Antriebsräder (4) ein hydraulisch angetriebenes Drehgestell umfassen.

20. Fahrzeug (2) nach einem der Ansprüche 15 bis 17, wobei die Antriebsräder (4) ein elektrisch angetriebenes Drehgestell umfassen.

## Revendications

1. Agencement (1) destiné à être monté au niveau d'un véhicule (2) destiné à la foresterie, comprenant une partie porteuse (3) et des roues motrices (4), où l'agencement (1) comprend au moins deux roues supplémentaires (5) qui peuvent être commandés individuellement dans le sens vertical et qui sont montés au niveau du véhicule (2) afin de répartir le poids du véhicule, le poids brut du véhicule, y compris son poids de charge utile, sur plusieurs zones du support (6), par terre, et ainsi améliorer la répartition du poids et réduire la pression exercée contre le support, par terre, **caractérisé en ce que** chacune des roues supplémentaires commandées individuellement comprend une paire de roues et est soumise à une force motrice.

2. Agencement (1) selon la revendication 1, dans lequel chacune des roues supplémentaires commandées individuellement (5) comprend un bogie de roue (5b).

3. Agencement selon la revendication 1, comprenant un moteur auxiliaire (7) qui entraîne la roue supplémentaire (5).

4. Agencement (1) selon la revendication 3, dans lequel le moteur (7) est entraîné par un système hydraulique comprenant une pompe (8).

5. Agencement selon la revendication 4, comprenant une source d'énergie (9) qui entraîne la pompe (8).

6. Agencement (1) selon l'une quelconque des revendications 1 à 5, dans lequel les roues supplémentaires commandées individuellement (5) sont montées au niveau du véhicule (2) sur une partie (10) du véhicule (2) qui peut être commandée.

7. Agencement (1) selon la revendication 6, dans lequel la partie (10) du véhicule qui peut être commandée est articulée sur au moins un jeu de roulements verticaux (10a) et est commandée à l'aide d'au moins deux vérins de commande (10b).

8. Agencement (1) selon l'une quelconque des revendications 1 à 5, dans lequel les roues supplémentaires commandées individuellement (5) sont montées au niveau du véhicule (2) sur une partie (11) du système de châssis du véhicule (2) qui ne peut pas être commandée.

9. Agencement (1) selon l'une quelconque des revendications 1 à 8, comprenant au moins deux bras (12) sur lesquels les roues supplémentaires (5) sont montées.

10. Agencement (1) selon la revendication 9, dans lequel chaque bras (12) est commandé individuellement et monté dans des paliers, et peut se déplacer indépendamment du mouvement de l'autre bras.

11. Agencement (1) selon la revendication 9 ou 10, dans lequel chaque bras (12) comprend un agencement d'amortissement (13) qui amortit le mouvement du bras, et un arbre rotatif (14) qui est monté dans des roulements et supporte la roue supplémentaire (5).

12. Agencement (1) selon la revendication 11, dans lequel l'arbre rotatif (14) qui est monté dans des roulements supporte un axe de roue (15) d'une paire de roues.

13. Agencement (1) selon la revendication 11 ou 12, dans lequel l'agencement d'amortissement (13) comprend un cylindre amortisseur qui est commandé par une unité hydraulique (16) qui est alimentée par une pompe hydraulique (17) qui obtient son énergie à partir d'un source d'énergie (19).

14. Agencement (1) selon l'une quelconque des revendications 11 à 13, comprenant un accumulateur (19) qui offre une installation à ressort et qui peut stocker de l'énergie pendant une courte période.

15. Véhicule (2) comprenant une partie porteuse (3), des roues motrices (4) et un agencement (1) selon l'une quelconque des revendications 1 à 14.

16. Véhicule (2) selon la revendication 15, dans lequel la partie porteuse (3) comprend un châssis porteur conventionnel.

17. Véhicule (2) selon la revendication 15 ou 16, dans lequel la partie porteuse (3) comprend un support de charge déplaçable séparé.

18. Véhicule (2) selon l'une quelconque des revendications 15 à 17, dans lequel les roues motrices (4) comprennent un bogie entraîné mécaniquement.

19. Véhicule (2) selon l'une quelconque des revendications 15 à 17, dans lequel les roues motrices (4) comprennent un bogie entraîné hydrauliquement.

20. Véhicule (2) selon l'une quelconque des revendications 15 à 17, dans lequel les roues motrices (4) comprennent un bogie entraîné électriquement.
